# EUROPÄISCHE PATENTSCHRIFT

(11) **EP 2 993 449 B1**
(45) Veröffentlichungstag und Bekanntmachung des Hinweises auf die Patenterteilung: **17.11.2021**
(21) Anmeldenummer: 14183599.1
(22) Anmeldetag: 04.09.2014
(51) Int. Cl.: G01G 7/04, G01G 21/20, G01G 23/01, G01G 21/23, G01L 1/08

(54) **Waage mit frei schwebender Waagschale**
Weighing scale with free floating scales pan
Balance dotée d'un plateau librement suspendu

(43) Veröffentlichungstag der Anmeldung: 09.03.2016
(73) Patentinhaber: Mettler-Toledo GmbH, 8606 Greifensee (CH)
(72) Erfinder: Reber, Daniel, 8322 Madetswil (CH)
(74) Vertreter: Mettler-Toledo

(56) Entgegenhaltungen:
- FR-A1- 2 657 431
- JP-A- 2005 127 858
- None

## Beschreibung

Die Erfindung betrifft eine Waage mit einer frei schwebenden Waageschale.

Um Gewichte mit hoher Genauigkeit zu messen, ist es bekannt, Magnetkraftkompensationswaagen zu verwenden. In solchen Waagen wird die auf die Waagschale ausgeübte Kraft von Lenkern, über Biegegelenke auf ein Hebelsystem übertragen. Der letzte Hebel des Hebelsystems wird mittels einer Tauchspule und einem Permanentmagneten in konstanter Position gehalten. Der dafür notwendiger Strom durch die Tauchspule wird gemessen und zur Erzeugung des Wägeergebnisses verwendet.

Herkömmliche Magnetkraftkompensationswaagen entkoppeln sämtliche Momente die auf die Waagschale wirken, damit nur die Kraft in Schwerkraftrichtung gemessen wird. Nachteilig dabei ist, dass zusätzliche Kräfte in die Schwerkraftrichtung entstehen und das Wägesignal verfälschen können. Folglich soll die Waage so eingestellt werden, dass die Wirkungsachse der Wägezelle, d.h. die Achse in welcher die zu messende Kraft angelegt werden soll und in welcher die Wägezelle am empfindlichsten ist, möglichst nah an die Schwerkraftrichtung ausgerichtet ist. Dies wird mit der Einstellung der Neigung der Waage erreicht.

Zudem können sich weitere Fehler bilden wenn der Schwerpunkt des Wägeguts sich nicht auf der Wirkungsachse der Wägezelle befindet. Die entstehende Eckenlastkraft wird nicht zur Wägezelle übertragen und kann für die Messung nicht berücksichtigt werden. Eckenlastkräfte können nur mit zusätzlichen Sensoren abgeschätzt und korrigiert werden.

Ein weiterer Nachteil ist, dass Kräfte in den verschiedenen Lagerpunkten und Biegegelenken entstehen, und somit die Genauigkeit der Waage beeinträchtigen können. Ferner reagieren Hebel und Biegegelenke besonders empfindlich auf Wärme und bilden somit vielfach Fehlerquellen für das Wägeergebnis.

Bekannt ist aus der Patentanmeldung US5'485'748 eine Waage mit einem elektromagnetischen Kraftkompensationssystem, wobei die Gewichtskraft direkt von der Waagschale auf das magnetische Kraftkompensationssystem, ohne mechanischen Kontakt übertragen wird. Daher erfolgt kein Kraftverlust wie es bei Lagerpunkten und Übertragungshebeln von klassischen Magnetkraftkompensationswaagen vorkommt. Die Schwerkraft wird von einem System mit zwei Tauchspulen kompensiert. Zudem sind passive Magnete senkrecht angeordnet und dienen dazu, das Kraftkompensationssystem in der Schwerkraftrichtung zu stabilisieren. So sorgen die passiven Magnete für die korrekte Neigung der Waage. Zudem kompensieren die passiven Magnete die von der Eckenlast verursachten Momente. Dabei ist diese Kompensation einzig von der Magnetkraft und von der Anordnung der passiven Magnete zueinander abhängig. Sie wird nicht der Eckenlast angepasst. In diesem Sinne kann nicht eingeschätzt werden, in welchem Ausmass die Eckenlast das Wägeergebnis beeinflusst. Dieses System ist daher zu ungenau für eine höchst auflösende Waagen.

JP 2005 127858 A offenbart eine Wägevorrichtung mit mindestens sechs Magneteinheiten und Führungen, die eine Lastkammer berührungslos in einer schwebenden Position halten. Die Magneteinheiten weisen jeweils zwei Spulen, zwei Elektromagnete und einen Dauermagneten auf. Gegenüber jeder Magneteinheit ist eine an der Lastkammer befestigte Führung aus ferromagnetischem Material angeordnet. Die Magneteinheiten sind in Bezug auf die Führungen derart angeordnet, dass sie jegliche Translation und Rotation der Lastkammer verhindern. Der Abstand zwischen jeder Führung und der entsprechenden Magneteinheit wird mit je einem Positionssensor gemessen.

Nach dem Einbringen eines Wägeguts in die Lastkammer wird der Strom gesteuert, um den Abstand zwischen Magneteinheiten und Führungen in eine stabile Position zu bringen. Wenn die Position stabil ist, wird der Strom schrittweise auf null geregelt. Dem entsprechend ändert sich die Anziehungskraft der Magneteinheiten und somit ändert sich der Abstand zwischen Magneteinheiten und Führungen beziehungsweise die Position der Lastkammer. Wenn der Strom null wird, werden die Abstände zwischen den Magneteinheiten und den jeweiligen Führungen gemessen. Das Gewicht des Wägeguts wird aus den Abständen zwischen den Magneteinheiten und den jeweiligen Führungen, und der Permeabilität des Magnets berechnet. Zur Optimierung der Regelung des Stroms beziehungsweise des Abstands zwischen Magneteinheiten und Führungen wird ein Hall Element verwendet.

Die in JP 2005 127858 A offenbarte Wägevorrichtung hat den Vorteil, dass der Strom in den Spulen auf null gesetzt wird. Somit wird in den Spulen keine zusätzliche Wärme erzeugt. Die Eigenschaften der Magnete werden auf diese Art in beschränktem Umfang beeinflusst.

Jedoch hat die Bestimmung des Gewichts anhand des Abstands erhebliche Nachteile. Die Nichtlinearität der Magnetfeld-Abstand-Funktion erschwert einerseits die Regelung des Abstands, anderseits führt sie zu einer Ungenauigkeit bei der Bestimmung des Gewichts.

Ein weiterer Nachteil dieser Waage ist, dass sie eine geschlossene Lastkammer aufweist, die auf allen Seiten von Magneten getragen wird. Die geschlossene Lastkammer ist schwerer als eine Waagschale. Durch ihre sogenannte Totlast beschränkt sie das maximale Volumen des Wägeguts. Ferner sind die Magnete an der Lastkammer befestigt. Dadurch wird das zu tragende Gewicht ohne Wägegut schwerer und die Genauigkeit der Waage wird reduziert.

Ein weiterer Nachteil der Lastkammer ist, dass eine solche Waage sehr voluminös ist unabhängig vom Volumen der Last, und deshalb unter erheblichem Einfluss von Luftauftrieb leidet. Zudem eignet sich diese Lösung wegen des grossen Volumens nicht zu Analysenwaagen.

Somit liegt der Erfindung die Aufgabe zugrunde ein Wägeverfahren und eine Wägevorrichtung zur Durchführung des Wägeverfahrens ohne Lagerkräfte zu schaffen, die erlaubt, möglichst genau das Gewicht zu messen, unabhängig vom Volumen des Wägeguts und wobei die Wägevorrichtung möglichst wenig empfindlich auf Vibrationen reagiert. Ein Wägeverfahren soll die Position des Schwerpunkts des Wägeguts auf der Waagschale sowie die Neigung der Wägevorrichtung messen und kompensieren können.

Dieses Problem wird durch ein Verfahren zum Betrieb einer Waage mit einer Waagschale, mindestens sechs Positionssensoren, und einem Wägemechanismus gelöst, wobei der Wägemechanismus mindestens sechs elektromagnetische Mechanismen mit je einem Permanentmagneten, und je einer Tauchspule aufweist. Während des Wägeprozesses erzeugen die elektromagnetischen Mechanismen durch die in den jeweiligen Tauchspulen fliessenden Ströme und aufgrund ihrer jeweiligen Ausrichtung und Position in Bezug auf der Waagschale Kompensationskräfte auf die Waagschale in den sechs Freiheitsgraden. Das beanspruchte Verfahren besteht aus den folgenden Schritten:
- Messung der Position der Waagschale in allen drei Dimensionen mittels der mindestens sechs Positionssensoren;
- simultane Regelung der in den jeweiligen Tauchspulen fliessenden Ströme damit die Kompensationskräfte durch die Summe ihrer jeweiligen Drehmomente die Waagschale in einer vorbestimmten frei schwebenden und konstanten Position in Bezug auf Translationen und Rotationen in den sechs Freiheitsgraden halten;
- Verwendung der Beträge der in den jeweiligen Tauchspulen fliessenden Ströme zur Berechnung des Wägeergebnisses.

Die Positionssensoren und das Wägemechanismus sind in einem Waagengehäuser angeordnet. Die Positionssensoren dienen zur Steuerung des Stroms durch die Tauchspulen. Der in den Tauchspulen fliessende Strom wird so geregelt, dass die Position der Waagschale konstant auf einem vorbestimmten Wert gehalten wird. Dieser dafür benötigte Strom ist proportional zur induzierten Kraft. Vorzugsweise weisen die Positionsmesser optoelektronische Sensoren auf. Die in den Tauchspulen fliessenden Ströme werden derart gesteuert, dass die Tauchspule beziehungsweise die Waagschale, in Bezug auf die jeweiligen Permanentmagnete, sich während des Wägeprozesses im Wesentlichen nicht bewegen.

Indem die Schwerkraft einzig von den elektromagnetischen Mechanismen kompensiert wird, und die mindestens sechs elektromagnetischen Mechanismen in den sechs Freiheitsgraden wirken, kann die auf der Waagschale ausgeübte Kraft vollständig kontrolliert, gemessen und kompensiert werden.

Unter dem Begriff "sechs Freiheitsgrade" sollen im vorliegenden Zusammenhang die drei Translationsfreiheitsgrade in Bezug auf ein kartesisches Koordinatensystem und die drei Rotationsfreiheitsgrade um die drei Achsen des kartesischen Koordinatensystems verstanden werden.

Vorzugsweise befindet sich die Tauchspule im linearen Bereich der jeweiligen Permanentmagneten. Auf diese Art stehen die Tauchspulen unter grösstmöglichem Einfluss des Magnetfelds des jeweiligen Permanentmagnets. Folglich können die von den Tauchspulen induzierte Kräfte (Kompensationskräfte) am genauesten bestimmt und kontrolliert werden. Ein Vorteil der elektromagnetischen Mechanismen ist die kleine Hysterese der heute verfügbaren Permanentmagnete.

Die von den mindestens sechs Tauchspulen induzierte Lorentz Kraft wird mittels der jeweiligen durchfliessenden Strömen geregelt. Mit den absoluten Werten der Kompensationtskräfte sowie den Positionen und der vektoriellen Ausrichtungen der einzelnen Tauchspulen in Bezug auf einander kann die Summe der auf den Schwerpunkt der Waagschale wirkenden Drehmomente berechnet werden. Daraus kann die resultierende Kraft in drei Dimensionen gerechnet werden.

In einer vorteilhaften Ausführung des Verfahrens ist die Waagschale mit einem einzigen vorzugsweise einstückigen Kopplungselement gekoppelt. Das Kopplungselement und die Waagschale sind fest mit einander verbunden. Während des Wägeprozesses erzeugen die elektromagnetischen Mechanismen durch die in den jeweiligen Tauchspulen fliessenden Ströme Kompensationskräfte auf die Waagschale über das Kopplungselement in den sechs Freiheitsgraden aufgrund ihrer jeweiligen Ausrichtung und Position in Bezug auf das Kopplungselement. In dieser Ausführung des Verfahrens üben die elektromagnetischen Mechanismen Kompensationskräfte unmittelbar auf das Kopplungselement aus.

Vorteilhaft bei dieser Ausführungsform ist, dass je nach der Form des Kopplungselements die Waagschale oberhalb, seitwärts oder unterhalb des Waagengehäuses angeordnet werden kann.

In einer anderen vorteilhaften Ausführung des Verfahrens in dem die Waagschale mit einem Kopplungselement mit den sechs elektromagnetischen Mechanismen gekoppelt ist, wird die Position des Kopplungselements von den Positionsmessern gemessen. Da die relative Position der Waagschale in Bezug auf das Kopplungselement konstant und bekannt ist, kann daraus die Position der Waagschale abgeleitet werden. Vorteilhaft ist dieses Verfahren wenn die Waagschale ausserhalb des Waagengehäuses liegt, z.B wenn sie seitwärts der Waage angeordnet ist.

In einer anderen Ausführungsform, in der die Tauchspulen durch die Kompensationskräfte in schwebender Position gehalten werden, kann die Position der Waagschale über die Position der mindestens sechs Tauchspulen gemessen werden. Aus der Position der Tauchspulen und der Position der Waagschale in Bezug auf die Position der Tauchspulen kann die Position der Waagschale abgeleitet werden.

In einer vorteilhaften Ausführungsform des Verfahrens werden die in den jeweiligen Tauchspulen fliessenden Ströme verarbeitet, um die Eckenlast zu berechnen. Wenn das Wägegut exzentrisch in Bezug auf dem Wägemechanismus plaziert ist, wird die Verteilung der vom Wägegut ausgeübten Kraft auf die elektromagnetischen Mechanismen beeinflusst. So können der Schwerpunkt der auf die Waagschale ausgeübten Kraft und die Wirkungsachse der einzelnen Kompensationskräften in Bezug auf die Senkrechte errechnet werden.

In einer weiteren Ausführungsform des Verfahrens werden die in den jeweiligen Tauchspulen fliessenden Ströme verarbeitet, um die Neigung der Waagschale zu berechnen. Die einzelnen Kompensationskräfte werden unmittelbar von der Neigung der Waage beeinflusst. Aus der Summe der resultierenden Drehmomente kann die Neigung der Waage abgeleitet werden. Folglich braucht die Neigung der freischwebenden Waagschale vor dem Betrieb nur grob eingestellt zu werden, und das Messresultat wird dennoch nicht von der Neigung der Waage beeinflusst.

Vorzugsweise messen die mindestens sechs Positionssensoren je die Position eines anderen vordefinierten Punkts der Waagschale. In einer vorteilhaften Ausführungsform sind drei Positionssensoren in der Schwerkraftrichtungsachse Z ausgerichtet, zwei sind orthogonal dazu in der Y-Achse und ein ist orthogonal dazu in der X-Achse ausgerichtet.

Eine Waage zur Durchführung der genannten Verfahren wird beansprucht. Die Waage weist eine Waagschale, mindestens sechs Positionssensoren, wobei die mindestens sechs Positionssensoren zur Messung der Position der Waagschale in allen drei Dimensionen vorgesehen sind, und einen Wägemechanismus mit mindestens sechs elektromagnetischen Mechanismen auf, wobei jeder elektromagnetischen Mechanismus je eine Tauchspule und einen Permanentmagneten aufweist, und das Wägemechanismus durch die in den jeweiligen Tauchspulen (7) fliessenden Ströme und aufgrund ihrer jeweiligen Ausrichtung und Position in Bezug auf die Waagschale zur Erzeugung von Kompensationskräften (F_{c1} - F_{c6}) auf die Waagschale in den sechs Freiheitsgraden vorgesehen ist. Zudem weist die Waage eine Stromversorgung zur individuellen Speisung der mindestens sechs Tauchspulen auf. Die Tauchspulen werden individuell durch eine Regelungseinheit geregelt. Die Regelungseinheit bekommt am Eingang die Signale der Positionssensoren und regelt dementsprechend die in den Tauchspulen fliessenden einzelnen Ströme, bis die Waagschale in konstanter vordefinierten und frei schwebender Position in Bezug auf Translationen und Rotationen in den sechs Freiheitsgraden mittels der Kompensationskräfte (F_{c1} - F_{c6}) gehalten wird. Ferner weist die Waage eine zur Berechnung des Wägeergebnisses mittels der Beträge der in den jeweiligen Tauchspulen fliessenden Ströme vorgesehene Recheneinheit auf.

Besonders vorteilhaft bei der beanspruchten Waage mit freischwebender Waagschale ist, dass sie keine Lagerpunkte zwischen den mindestens sechs elektromagnetischen Mechanismen und der Waagschale aufweist. Somit wird der Kraftverlust zwischen der von den elektromagnetischen Mechanismen induzierten Kraft und der auf die Waagschale ausgeübte Kraft praktisch auf null gesetzt. Dementsprechend ist die Waage mit freischwebender Waagschale geeignet um Gewichte mit hoher Auflösung zu messen.

Der Verzicht auf Gehänge, Lenker, Biegelenke und Hebel reduziert grundlegend das Volumen der Waage. Daraus entsteht eine relativ kleinere und niedrigere Waage und dementsprechend mehr Platz auf dem Labortisch.

Die Waagschale kann direkt über dem Wägemechanismus angeordnet sein. In diesem Fall ist es vorteilhaft die Tauchspulen an der Waagschale direkt zu befestigen. Da herkömmliche Tauchspulen leichter als Permanentmagnete sind, ist das zu tragende Gewicht kleiner als bei umgekehrter Anordnung.

In dieser Ausführungsform ergibt sich durch die gleichmässige Verteilung der auf die Waagschale wirkenden Kraft, ein grösserer Messbereich, als bei einem herkömmlichen Direktmesssystemen mit einer einzigen Tauchspule.

Die elektromagnetischen Mechanismen können auch über ein Kopplungselement mit der Waagschale gekoppelt werden. Dies erlaubt eine Waage zu schaffen, bei der die Waagschale nicht zwingend über dem Wägemechanismus angeordnet ist.

Beispielsweise kann die Waagschale seitwärts der Waage angeordnet sein. Dies ist für den Gebrauch der Waage im Labor besonders vorteilhaft. Die Waagschale kann dementsprechend näher an der Arbeitsfläche angeordnet sein. Dies reduziert die Anfälligkeit für Luftströmen und vereinfacht das Auflegen des Wägeguts auf die Waagschale.

In einer anderen Ausführungsform sind jeweils drei elektromagnetische Mechanismen im Wesentlichen auf zwei Linien angeordnet, die nah aneinander angeordnet sind. Der Vorteil daran ist, dass die Abmessung der Waage in einer Dimension deutlich reduziert werden kann. Diese längliche und schmale Ausführungsform kann in Multizellenanordnungen Anwendung finden.

Eine weitere Ausführungsform der Waage weist eine Waagschale auf, die sich zwischen zwei Gruppen von elektromagnetischen Mechanismen befindet. Besonders vorteilhaft ist der Gebrauch dieser Waage in Verbindung mit einem Förderband. Da die elektromagnetischen Mechanismen sich nicht direkt unter der Waagschale befinden, können sie auf einem festen Körper installiert werden, der nicht anfällig auf Vibrationen ist. Zudem ermöglicht die Verteilung der elektromagnetischen Mechanismen in zwei Gruppen eine bessere Verteilung des Gewichts auf alle elektromagnetischen Mechanismen. Die zwei gegenüberliegenden Gruppen von elektromagnetischen Mechanismen erlauben die Durchführung des Förderbands in ihrer Mitte.

Die Waagschale kann auch hängend mit dem Wägemechanismus gekoppelt sein.

In einer vorteilhaften Ausführungsform sind die elektromagnetischen Mechanismen derart angeordnet, dass die elektromagnetischen Mechanismen im Wesentlichen wie ein Hexapod auf die Waagschale wirken. Ein Hexapod weist sechs Antriebe auf, die eine Platform im Raum in den sechs Achsen, drei linearen und drei rotatorischen bewegen können.

Diese Ausführungsform hat den Vorteil, dass die sechs elektromagnetischen Mechanismen gleichmässig belastet werden. Folglich verfügen die Tauchspulen über eine grössere Kapazität. Besonders vorteilhaft ist diese Konfiguration für das Wiegen von Filtern oder anderen voluminösen Wägegütern.

In einer weiteren Ausführungsform sind die elektromagnetischen Mechanismen derart angeordnet, dass der erste, der zweite und der dritte elektromagnetische Mechanismus eine Kraft im Wesentlichen in Gegenrichtung der Schwerkraft ausüben und somit die Waagschale in frei schwebender Position halten. Der vierte, der fünfte und der sechste elektromagnetischen Mechanismus sind derart angeordnet, dass die Waagschale innerhalb der horizontalen Ebene stabilisiert wird.

In einer anderen Ausführungsform der Waage sind die elektromagnetischen Mechanismen derart angeordnet, dass sie über ein vertikales Kopplungselement der Waagschale auf die Waagschale wirken, und dass der erste elektromagnetische Mechanismus eine Kraft auf das Kopplungselement im Wesentlichen in die Gegenrichtung der Schwerkraft ausübt, und dass der zweite und der dritte elektromagnetische Mechanismus einen ersten Punkt des Kopplungselements in einer ersten horizontalen Ebene stabilisierten, dass der vierte und der fünfte elektromagnetische Mechanismus einen zweiten Punkt des Kopplungselements in einer zweiten horizontalen Ebene ausüben, dass der sechste elektromagnetische Mechanismus derart angeordnet ist, dass er eine Rotation der Waagschale in ihrer horizontalen Ebene verhindert.

Verschiedene Ausführungsbeispiele der Waage mit freischwebender Waagschale sind in den schematisierten Zeichnungen dargestellt und werden im Folgenden näher beschrieben.

Es zeigen:
- Fig. 1: Einen elektromagnetischen Mechanismus in schematisierte Darstellung
- Fig. 2: Eine erste Ausführungsform einer Waage mit einer in der Mitte der Anordnung elektromagnetischer Mechanismen angeordneten freischwebenden Waagschale.
- Fig. 3: Eine zweite Ausführungsform einer Waage mit einer seitwärts der Anordnung elektromagnetischer Mechanismen angeordneten freischwebenden Waagschale.
- Fig. 4: Eine dritte Ausführungsform einer Waage mit einer seitwärts der Anordnung elektromagnetische Mechanismen angeordneten freischwebenden Waagschale.
- Fig. 5: Eine vierte Ausführungsform einer Waage mit einem zweiteiligen Waagengehäuse und mit einer freischwebenden Waagschale zwischen den beiden Teilen.
- Fig. 6: Eine Anordnung für eine Präzisionswaage.
- Fig. 7: Eine schmale Ausführung der Waage mit freischwebender Waagschale mit abgebildeten Positionssensoren.

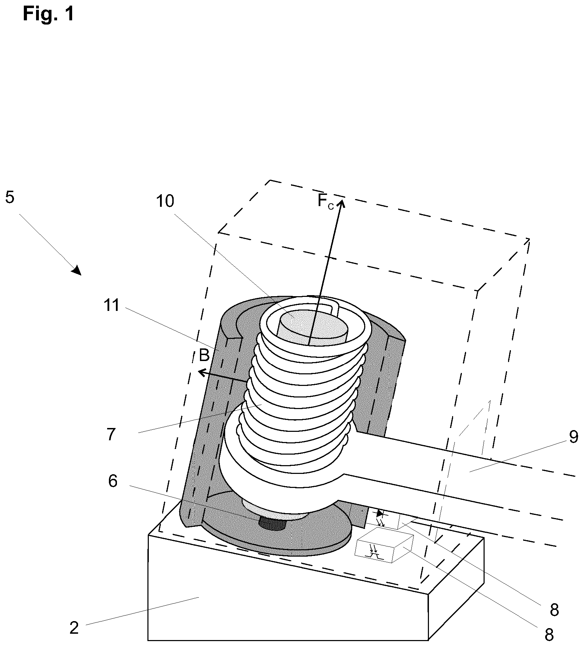

Figur 1 zeigt einen elektromagnetischen Mechanismus 5. Der elektromagnetische Mechanismus 5 weist eine Tauchspule 7, und einen Permanentmagnet 6 auf. Die Tauchspule 7 ist an einem Kopplungselement 9 mechanisch befestigt. Der Permanentmagnet 6 ist am Waagengehäuse 2 gehalten. Er ist mit einem Mantel 11 und einem Polschuh 10 verbunden. Der Polschuh 10 und der Mantel 11 dienen dazu, das Magnetfeld zu führen. Die Tauchspule 7 ist in Bezug auf den Permanentmagnet 6 derart angeordnet, dass sie sich entlang des Kraftvektors F_{c} bewegen kann. Der elektromagnetische Mechanismus 5 ist nicht senkrecht ausgerichtet. Auf diese Art hat der Kraftvektor F_{c} eine senkrechte und eine waagrechte Komponente zur Schwerkraftrichtung.

Die Tauchspule 7 ist an einer variablen Stromversorgung angeschlossen. Nach dem Lorentz-Kraft-Prinzip wird beim Durchfluss eines Stroms durch die Tauchspule 7 im Magnetfeld des Permanentmagneten 6 eine Kraft erzeugt. Die Polarität und die Amplitude des Stroms werden derart geregelt, dass die Tauchspule 7 das Kopplungselement 9 freischwebend und berührungslos in einer vordefinierten konstanten Position über dem Waagengehäuse 2 hält.

Das Kopplungselement 9 kann an der Tauchspule 7 oder am Permanentmagnet 8 befestigt werden. Vorzugsweise wird das Kopplungselement 9 von der Tauchspule 7 getragen. So werden weniger Befestigungsmittel zwischen der Tauchspule 7 und dem Kopplungselement 9 gebraucht, und die Totlast der Waagschale 3 wird reduziert.

Alternativ kann auch der Permanentmagnet 6 am Kopplungselement 9 befestigt werden, und die Tauchspule 7 mit dem Waagengehäuser 2 verbunden sein. Damit am wenigsten Strom verbraucht wird, ist es jedoch von Vorteil für den elektromagnetischen Mechanismus 5 das leichtere Element aus Tauchspule 7 und Permanentmagnet 6 am bewegenden Teil d.h. am Kopplungselement 9 zu befestigen.

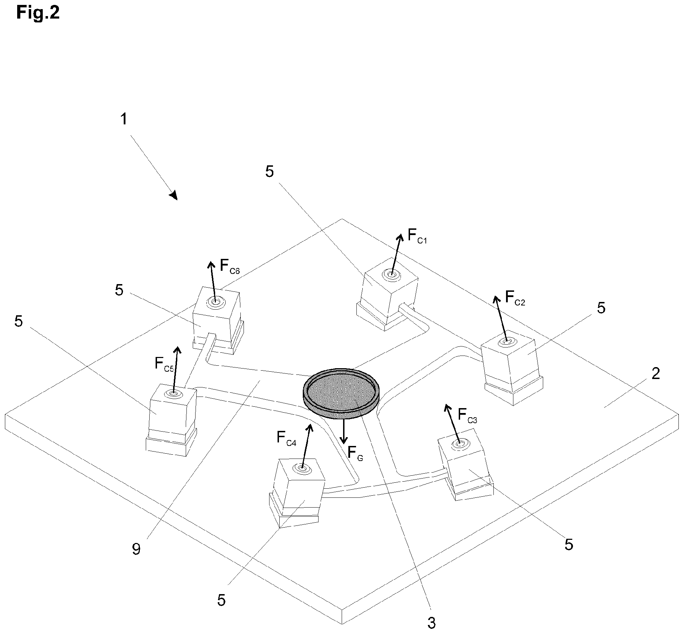

Figur 2 zeigt eine Waage 1 mit sechs elektromagnetischen Mechanismen 5 und einer freischwebenden Waagschale 3. Die elektromagnetischen Mechanismen 5 sind an einer Grundplatte des Waagengehäuses 2 befestigt. Sie koppeln das Kopplungselement 9 mit dem Waagengehäuse 2 mittels der von den elektromagnetischen Mechanismen 5 induzierten Kräften F_{c1}-F_{c6}. Die Waagschale 3 ist mechanisch mit dem Kopplungselement 9 verbunden. Das Kopplungselement 9 weist mehrere Arme auf, die die Waagschale 3 mit den elektromagnetischen Mechanismen 5 koppeln. Der Vorteil des mehrarmigen Kopplungselements 9 ist sein geringes Gewicht. Die Waagschale 3 liegt im Wesentlichen in der Mitte der elektromagnetischen Mechanismen 5. So wird die Schwerkraft des Wägeguts in etwa gleichmässig auf die sechs elektromagnetischen Mechanismen 5 verteilt. Dadurch wird eine grössere Gewichtkapazität ermöglicht. Die Waage 1 kann mehr als sechs elektromagnetische Mechanismen 5 aufweisen.

Die sechs elektromagnetischen Mechanismen 5 sind nicht senkrecht ausgerichtet. Sie sind derart orientiert, dass sie in Bezug auf Translationen und Rotationen in allen sechs Freiheitsgraden jeweils eine Kraft ausüben können. Sie werden je mit einem Strom geregelt, so dass sie die Schwerkraft der Waagschale 3, des Kopplungselements 9 und des Wägeguts kompensieren und das Kopplungselement 9 in einer konstanten vorbestimmten und freischwebenden Position halten. Mit der Lorenzkraft kann aus dem notwendigen Strom in der Tauchspule 7 die jeweiligen induzierten Kraft F_{c} errechnet werden. Anhand der Positionen und Orientierungen der elektromagnetischen Mechanismen 5 in Bezug zu einander, werden die auf die Waaagschale 3 wirkende Drehmomente in den drei Dimensionen berechnet. Aus der Summe aller Drehmomente kann die resultierende Kompensationskraft gerechnet werden. Aus der senkrechten Komponente davon kann die Masse des Wägeguts abgeleitet werden.

Die mindestens sechs Positionssensoren 8, die in den Figuren 2 bis 7 nicht ersichtlich sind, können direkt oder indirekt im Waagengehäuse 2 befestigt sein. Sie können entweder unmittelbar die Position der Waagschale 3 über sechs vordefinierte Punkte der Waagschale 3 messen, oder über sechs vordefinierte Punkte des Kopplungselements 9. Alternativ kann die Position der freischwebenden Teile der elektromagnetischen Mechanismen 5 (Tauchspulen oder Permanentmagnete) gemessen werden. Die Positionssensoren 8 sind derart angeordnet, dass sie die Position der Waagschale 3 in den drei Dimensionen erfassen.

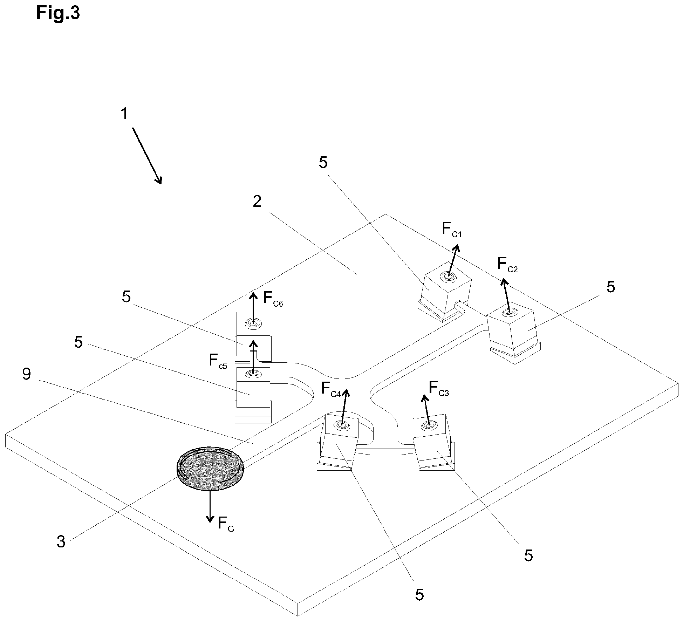

Figur 3 zeigt eine Waage 1 in einer weiteren Ausführungsform mit sechs elektromagnetischen Mechanismen 5 und einer freischwebenden Waagschale 3. Die elektromagnetischen Mechanismen 5 sind am Waagengehäuse 2 befestigt. Sie koppeln das Kopplungselement 9 mit dem Waagengehäuse 2. Das Kopplungslement 9 weist mehrere Arme auf. Ein längerer Arm ist mit der Waagschale 3 verbunden, so dass die Waagschale 3 nicht über dem Wägemechanismus 4 liegt, sondern seitwärts.

Vier der sechs elektromagnetischen Mechanismen 5 sind näher an der Waagschale 3 als die zwei anderen angeordnet. Diese Anordnung erlaubt eine im Wesentlichen gleichmässige Verteilung der Schwerkraft des Wägeguts, der Waagschale 3 und des Kopplungselements 9 auf den sechs elektromagnetischen Mechanismen 5.

Die sechs elektromagnetischen Mechanismen 5 sind nicht senkrecht ausgerichtet. Sie sind derart orientiert, dass sie in Bezug auf Translationen und Rotationen in allen sechs Freiheitsgraden jeweils eine Kraft ausüben.

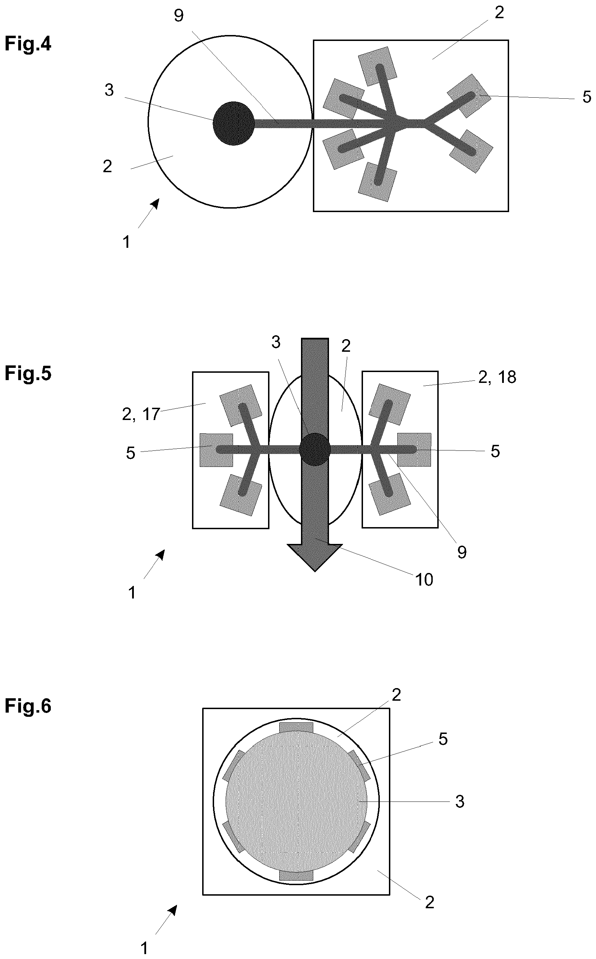

Figuren 4 bis 7 zeigen verschiedene Konfigurationen des Systems von elektromagnetischen Mechanismen 5. Jede Konfiguration ist für eine bestimmte Anwendung der Waage besonders gut geeignet.

Figur 4 zeigt stark schematisiert in der Aufsicht eine Waage 1 mit einer freischwebenden Waagschale 3, die neben dem Waagengehäuse 2 angeordnet ist. Die Waagschale 3 ist durch ein Kopplungselement 9 mit den elektromagnetischen Mechanismen 5 gekoppelt. Vier elektromagnetische Mechanismen 5 sind näher bei der Waagschale 3 als die zwei anderen angeordnet, d.h. die elektromagnetischen Mechanismen 5 sind so angeordnet, dass die Kraft möglichst gleichmässig zwischen den sechs Tauchspulen 7 verteilt wird.

Diese Konfiguration hat den Vorteil dass die Waagschale 3 sich sehr nah an der Arbeitsfläche befindet. Dies vereinfacht das Auflegen des Wägeguts auf die Waagschale 3 und das Reinigen der Waagschale 3. Zudem ist die Waagschale 3 in dieser Konfiguration weniger Luftströmen ausgesetzt.

Figur 5 zeigt eine Waage 1 mit sechs elektromagnetischen Mechanismen 5 und einem ersten 17 und einem zweiten 18 Waagengehäuse auf. Drei elektromagnetischen Mechanismen 5 sind auf einer Seite der Waagschale auf der Grundplatte des ersten Waagengehäuses 17 angeordnet, und drei andere sind auf der anderen Seite der Waagschale 3 auf der Grundplatte des zweiten Waagengehäuse 18 angeordnet.

Das mehrarmige Kopplungselement 9 verbindet alle sechs elektromagnetischen Mechanismen 5 mit einander mit einem minimalen Gewicht.

Besonders vorteilhaft ist diese Ausführung für die Anwendung der Waage 1 mit einem Förderband 10. Die Waage 1 wird derart angeordnet, dass das Förderband 10 nicht oberhalb der Waagengehäuse 17, 18 zu liegen kommt. So können die Waagengehäuse 17, 18 auf einen stabilen Sockel gestellt werden, um nicht den Vibrationen des Förderbands 10 zu unterliegen.

Die Schwerkraft ist auf die sechs elektromagnetischen Mechanismen 5 gleichmässig um der Waagschale 2 verteilt. Folglich kann man den grösst möglichen Nutzen aus ihrer Kapazität erhalten.

Figur 6 zeigt eine Waage 1 bei der die Waagschale 3 freischwend über dem Wägemechanismus 4 angeordnet ist. Die elektromagnetischen Mechanismen 5 sind im Kreis in im Wesentlichen regelmässigen Abständen angeordnet. Die Waagschale 3 befindet sich zentriert darüber. Die elektromagnetischen Mechanismen 5 sind derart angeordnet, dass die elektromagnetischen Mechanismen 5 im Wesentlichen wie ein Hexapod auf die Waagschale 3 wirken.

Bei dieser Ausführungsform können die Tauchspulen 7 oder die Permanentmagnete 6 direkt an der Waagschale 3 befestigt sein. Es wird kein Kopplungselement 9 gebraucht. Dadurch werden die Genauigkeit und die Kapazität der Waage 1 erhöht und die Konstruktion der Waage 1 vereinfacht.

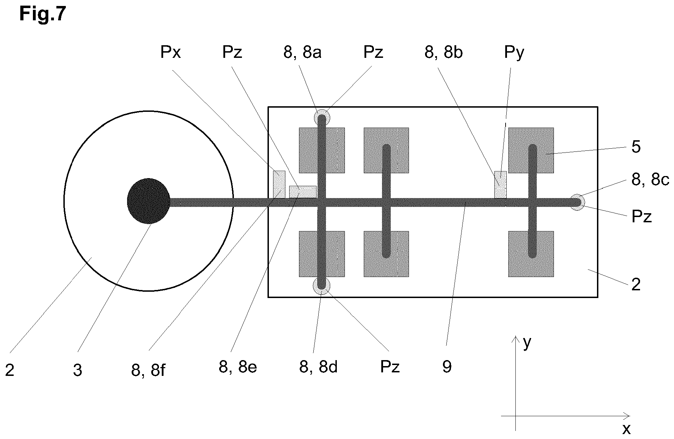

Figur 7 zeigt eine Ausführungsform der Waage 1 mit abgebildeten Positionssensoren, bei der die Waageschale 3 seitwärts vom Waagengehäuser 2 schwebt, das Kopplungselement 9 transversal ist und die elektromagnetischen Mechanismen 5 auf zwei Linien unmittelbar links und rechts vom Kopplungselement 9 angeordnet sind, so dass die Gewichtsverteilung möglichst gleichmässig auf die sechs elektromagnetischen Mechanismen 5 erfolgt.

Mit dieser Konfiguration wird ein schmales Waagengehäuse 2 geschaffen. Schmale Waagen können gut aneinander gereiht werden und finden Anwendung für die Kalibration von Pipetten und in anderen Bereichen in denen mehrere Gewichte gleichzeitig gemessen werden.

Sechs Positionssensoren sind so angeordnet, dass sie die Position des Kopplungselements 9 in den drei Dimensionen messen. Aus der Position der Waagschale 3 in Bezug auf die Position des Kopplungselements 9 kann die Position der Waagschale 3 abgeleitet werden.

Die Positionssensoren 8 sind an der Grundplatte des Waagengehäuses 2 befestigt und messen den jeweiligen Abstand bis zum Kopplungselement 9. Die Positionssensoren 8a, 8c und 8d sind derart ausgerichtet, dass sie je die Abstände zum Kopplungselement 9 in der Z-Achse messen. Die Positionssensoren 8b und 8e sind derart angeordnet, dass sie die Abstände zum Kopplungselement 9 in der Y-Achse messen. Der Positionssensor 8f misst die Position zum Kopplungselement 9 in der X-Achse.

Es kann auch mehr als sechs Positionssensoren 8 geben. Es sollte aber mindestens sechs geben, und sie sollten derart in Bezug auf den Kopplungselement bzw. die Waagschale 3 angeordnet sein, dass sie die Position des Kopplungselements 9 bzw. der Waagschale 3 in den drei Dimensionen messen.

Die Positionssensoren weisen vorzugsweise optoelektronische Bauelemente auf. Es kann aber jeder Art von Positionsmessern sein.

Vorangehend beschrieben und in den Figuren gezeigt wurden im Wesentlichen identische elektromagnetische Mechanismen, die im Wesentlichen in einer Ebene angeordnet sind und ein Kopplungselement, welches überwiegend flach ausgestaltet ist. Es versteht sich von selbst, dass eine Anordnung von nicht zwingend identischen elektromagnetischen Mechanismen in mehreren Ebenen und ein Kopplungselement in gekrümmter Ausführung ebenfalls vom Gegenstand der Erfindung erfasst sein sollen.

### Bezugszeichenliste

- 1: Waage
- 2: Waagengehäuser
- 3: Waagschale
- 4: Wägemechanismus
- 5: Elektromagnetischer Mechanismus
- 6: Permanentmagnet
- 7: Tauchspule
- 8: Positionssensor
- 8a: Erster Positionssensor
- 8b: Zweiter Positionssensor
- 8c: Dritter Positionssensor
- 8d: Vierter Positionssensor
- 8e: Fünfter Positionssensor
- 8f: Sechster Positionssensor
- 9: Kopplungselement
- 10: Förderband
- 11: Polschuh
- 12: Mantel
- B: Magnetfeld
- F_{c1-6}: Kompensationskräfte
- F_{G}: Schwerkraft
- 17: Erstes Waagengehäuse
- 18: Zweites Waagengehäuse
- Px: Position in der X-Achse
- Py: Position in der Y-Achse
- Pz: Position in der Z-Achse

## Patentansprüche

1. Verfahren zum Betrieb einer Waage (1) mit einer Waagschale (3), mindestens sechs Positionssensoren (8) und einem Wägemechanismus (4), wobei der Wägemechanismus (4) mindestens sechs elektromagnetische Mechanismen (5) mit mindestens je einem Permanentmagnet (6), und mindestens je einer Tauchspule (7) aufweist, und wobei die elektromagnetischen Mechanismen (5) während des Wägeprozesses durch die in den jeweiligen Tauchspulen (7) fliessenden Ströme und aufgrund ihrer jeweiligen Ausrichtung und Position in Bezug auf die Waagschale (3) Kompensationskräfte (F_{c1} - F_{c6}) auf die Waagschale (3) in den sechs Freiheitsgraden erzeugen,
bestehend aus den folgenden Schritten:
- Messung der Position der Waagschale (3) in allen drei Dimensionen mittels der mindestens sechs Positionssensoren (8);
- simultane Regelung der in den jeweiligen Tauchspulen (7) fliessenden Ströme damit die Kompensationskräfte (F_{c1} - F_{c6}) durch die Summe ihrer jeweiligen Drehmomente die Waagschale (3) in einer vorbestimmten frei schwebenden und konstanten Position in Bezug auf Translationen und Rotationen in den sechs Freiheitsgraden halten;
- Verwendung der Beträge der in den jeweiligen Tauchspulen (7) fliessenden Ströme zur Berechnung des Wägeergebnisses.

2. Verfahren zum Betrieb einer Waage (1) gemäss Anspruch 1 **dadurch gekennzeichnet, dass** die elektromagnetischen Mechanismen (5) während des Wägeprozesses durch die in den jeweiligen Tauchspulen (7) fliessenden Ströme Kompensationskräfte (F_{c1} - F_{c6}) auf die Waagschale (3) über ein mit der Waagschale (3) verbundenes einstückiges Kopplungselement (9) in den sechs Freiheitsgraden aufgrund ihrer jeweiligen Ausrichtung und Position in Bezug auf den Kopplungselement (9) erzeugen.

3. Verfahren zum Betrieb einer Waage (1) gemäss Anspruch 1 oder 2 **dadurch gekennzeichnet, dass** die Messung der Position der Waagschale (3) über die Messung der Position der Tauchspulen (7) erfolgt, und dass daraus und aus der bekannten Position der Waagschale (3) in Bezug auf die Tauchspulen (7) die Position der Waagschale (3) in Bezug auf die Positionssensoren (8) abgeleitet wird.

4. Verfahren zum Betrieb einer Waage (1) gemäss Anspruch 1 oder 2 **dadurch gekennzeichnet, dass** die Messung der Position der Waagschale (3) über die Messung der Position des Kopplungselements (9) erfolgt, und dass daraus und aus der bekannten Position der Waagschale (3) in Bezug auf den Kopplungselement (9) die Position der Waagschale (3) in Bezug auf die Positionssensoren (8) abgeleitet wird.

5. Verfahren zum Betrieb einer Waage (1) gemäss einem der Ansprüche 1 bis 4 **dadurch gekennzeichnet, dass** die in den jeweiligen Tauchspulen (7) fliessenden Ströme verarbeitet werden, um die Neigung der Waagschale (3) zu berechnen.

6. Verfahren zum Betrieb einer Waage (1) gemäss einem der Ansprüche 1 bis 5 **dadurch gekennzeichnet, dass** die in den jeweiligen Tauchspulen (7) fliessenden Ströme verarbeitet werden, um die Position des Schwerpunkts eines auf der Waagschale (3) liegenden Wägeguts zu berechnen.

7. Verfahren zum Betrieb einer Waage (1) gemäss einem der Ansprüche 1 bis 6 **dadurch gekennzeichnet, dass** die Position von drei vordefinierten Punkten der Waagschale (3) in der Z-Achse gemessen werden, die Position von zwei vordefinierten Punkten der Waagschale (3) in der Y-Achse gemessen werden, und die Position von einem vordefinierten Punkt der Waagschale (3) in der X-Achse gemessen wird.

8. Waage (1) mit einer Waagschale (3), mindestens sechs Positionssensoren (8), wobei die mindestens sechs Positionssensoren zur Messung der Position der Waagschale (3) in allen drei Dimensionen vorgesehen sind, einem Wägemechanismus (4) der mindestens sechs elektromagnetische Mechanismen (5) mit mindestens je einem Permanentmagnet (6), und mindestens je einer Tauchspule (7) aufweist, wobei der Wägemechanismus (4), durch die in den jeweiligen Tauchspulen (7) fliessenden Ströme und aufgrund ihrer jeweiligen Ausrichtung und Position in Bezug auf die Waagschale (3) zur Erzeugung von Kompensationskräften (F_{c1} - F_{c6}) auf die Waagschale (3) in den sechs Freiheitsgraden vorgesehen ist, einer Regeleinheit, wobei die Regeleinheit zur Regelung der in den jeweiligen Tauchspulen (7) fliessenden Ströme vorgesehen ist, wobei die Kompensationskräfte (F_{c1} - F_{c6}) durch die Summe ihrer jeweiligen Drehmomente die Waagschale (3) in einer vorbestimmten frei schwebenden und konstanten Position in Bezug auf Translationen und Rotationen in den sechs Freiheitsgraden halten, und einer zur Berechnung des Wägeergebnisses mittels der Beträge der in den jeweiligen Tauchspulen (7) fliessenden Ströme vorgesehenen Recheneinheit.

9. Waage (1) gemäss Anspruch 8 **dadurch gekennzeichnet, dass** die mindestens sechs elektromagnetischen Mechanismen (5) derart zu einander angeordnet sind, dass das Gewicht der Waagschale (3) im Wesentlichen gleichmässig auf die mindestens sechs elektromagnetischen Mechanismen (5) verteilt ist.

10. Waage (1) gemäss einem der Ansprüche 8 oder 9 **dadurch gekennzeichnet, dass** die Waagschale (3) oberhalb, unterhalb oder seitwärts des Wägemechanismus (4) angeordnet ist.

11. Waage (1) gemäss einem der Ansprüche 8 bis 10 **dadurch gekennzeichnet, dass** jeweils drei elektromagnetischen Mechanismen (5) im Wesentlichen auf zwei insbesondere parallelen Linien angeordnet sind, die nah aneinander angeordnet sind.

12. Waage (1) gemäss einem der Ansprüche 8 bis 10 **dadurch gekennzeichnet, dass** mindestens drei elektromagnetische Mechanismen (5) auf einer ersten Seite der Waagschale (3) angeordnet sind, und dass mindestens drei elektromagnetischen Mechanismen (5) auf einer zweiten Seite der Waagschale (3) gegenüberliegend der ersten Seite angeordnet sind.

13. Waage (1) gemäss einem der Ansprüche 8 bis 10 **dadurch gekennzeichnet, dass** die elektromagnetischen Mechanismen (5) derart angeordnet sind, dass die elektromagnetischen Mechanismen (5) im Wesentlichen wie ein Hexapod auf die Waagschale (3) wirken.

14. Waage (1) gemäss einem der Ansprüche 8 bis 13 **dadurch gekennzeichnet, dass** das Kopplungselement (9) ein einstückiger, mehrarmiger Trägers ist, der die jeweiligen elektromagnetische Mechanismen (5) und die Waagschale (3) miteinander verbindet.

15. Waage (1) gemäss einem der Ansprüche 8 bis 14 **dadurch gekennzeichnet, dass** die Elektromagnetische Mechanismen im wesentlichem identisch sind und sind im Wesentlichen auf einer Ebene angeordnet.

## Claims

1. Method for operating a weighing scale (1) with a scales pan (3), at least six position sensors (8) and a weighing mechanism (4), wherein the weighing mechanism (4) comprises six electromagnetic mechanisms (5) each with at least one permanent magnet (6) and each with at least one plunger coil (7), and wherein, during the weighing process, the electromagnetic mechanisms (5) generate, by the currents flowing in the respective plunger coils (7) and based on the respective orientation and position thereof relative to the scales pan (3), compensation forces (F_{c1} - F_{c6}) on the scales pan (3) in the six degrees of freedom,
consisting of the following steps:
- measuring the position of the scales pan (3) in all three dimensions by means of the at least six position sensors (8);
- simultaneously regulating the currents flowing in the respective plunger coils (7) so that the compensation forces (F_{c1} - F_{c6}) hold, by the sum of the respective torques thereof, the scales pan (3) in a predefined, free floating and constant position relative to translations and rotations in the six degrees of freedom;
- using the amounts of the currents flowing in the respective plunger coils (7) to compute the weighing results.

2. Method for operating a weighing scale (1) according to claim 1, **characterized in that**, during the weighing process, the electromagnetic mechanisms (5) generate, by the currents flowing in the respective plunger coils (7), compensation forces (F_{c1} - F_{c6}) on the scales pan (3) via a single-piece coupling element (9) connected to the scales pan (3) in the six degrees of freedom based on the respective orientation and position thereof relative to the coupling element (9).

3. Method for operating a weighing scale (1) according to claim 1 or 2, **characterized in that** the measurement of the position of the scales pan (3) occurs via the measurement of the position of the plunger coils (7) and **in that**, therefrom and from the known position of the scales pan (3) relative to the plunger coils (7), the position of the scales pan (3) relative to the position sensors (8) is derived.

4. Method for operating a weighing scale (1) according to claim 1 or 2, **characterized in that** the measurement of the position of the scales pan (3) occurs via the measurement of the position of the coupling element (9) and **in that**, therefrom and from the known position of the scales pan (3) relative to the coupling element (9), the position of the scales pan (3) relative to the position sensors (8) is derived.

5. Method for operating a weighing scale (1) according to any one of claims 1 to 4, **characterized in that** the currents flowing in the respective plunger coils (7) are processed in order to calculate the inclination of the scales pan (3).

6. Method for operating a weighing scale (1) according to any one of claims 1 to 5, **characterized in that** the currents flowing in the respective plunger coils (7) are processed in order to calculate the position of the center of gravity of a weighed object lying on the scales pan (3).

7. Method for operating a weighing scale (1) according to any one of claims 1 to 6, **characterized in that** the position of three predefined points of the scales pan (3) is measured in the Z-axis, the position of two predefined points of the scales pan (3) is measured in the Y-axis, and the position of one predefined point of the scales pan (3) is measured in the X-axis.

8. Weighing scale (1) with a scale pan (3), at least six position sensors (8), wherein the at least six position sensors are provided for measuring the position of the scales pan (3) in all three dimensions, a weighing mechanism (4) which comprises at least six electromagnetic mechanisms (5) each with at least one permanent magnet (6), and with at least one plunger coil (7), wherein the weighing mechanism (4), by the currents flowing in the respective plunger coils (7) and based on the respective orientation and position thereof relative to the scales pan (3), is provided for the generation of compensation forces (F_{c1} - F_{c6}) on the scales pan (3) in the six degrees of freedom, with a regulating unit, wherein the regulating unit is provided for regulating the currents flowing in the respective plunger coils (7), wherein the compensation forces (F_{c1} - F_{c6}), by the sum of the respective torques thereof, hold the scales pan (3) in a predetermined, free floating and constant position relative to translations and rotations in the six degrees of freedom, and with a computation unit provided for computing the weighing results by means of the amounts of the currents flowing in the respective plunger coils (7).

9. Weighing scale (1) according to claim 8, **characterized in that** the at least six electromagnetic mechanisms (5) are arranged with respect to one another in such a manner that the weight of the scales pan (3) is distributed substantially evenly over the at least six electromagnetic mechanisms (5).

10. Weighing scale (1) according to either claim 8 or claim 9, **characterized in that** the scales pan (3) is arranged above, under or to the side of the weighing mechanism (4).

11. Weighing scale (1) according to any one of claims 8 to 10, **characterized in that** three electric magnetic mechanisms (5) are respectively arranged substantially on two lines, in particular two parallel lines, which are arranged close to one another.

12. Weighing scale (1) according to any one of claims 8 to 10, **characterized in that** at least three electromagnetic mechanisms (5) are arranged on a first side of the scales pan (3) and **in that** at least three electromagnetic mechanisms (5) are arranged on a second side of the scales pan (3) opposite the first side.

13. Weighing scale (1) according to any one of claims 8 to 10, **characterized in that** the electromagnetic mechanisms (5) are arranged in such a manner that the electromagnetic mechanisms (5) act substantially as a hexapod on the scales pan (3).

14. Weighing scale (1) according to any one of claims 8 to 13, **characterized in that** the coupling element (9) is a single-piece, multi-arm support which connects the respective electromagnetic mechanisms (5) and the scales pan (3) to one another.

15. Weighing scale (1) according to any one of claims 8 to 14, **characterized in that** the electromagnetic mechanisms are substantially identical and arranged substantially in one plane.

## Revendications

1. Procédé de fonctionnement d'une balance (1) avec un plateau de pesée (3), au moins six capteurs de position (8) et un mécanisme de pesage (4), dans lequel le mécanisme de pesage (4) présente au moins six mécanismes électromagnétiques (5) avec au moins respectivement un aimant permanent (6) et au moins respectivement une bobine mobile (7), et dans lequel les mécanismes électromagnétiques (5), grâce aux courants circulant dans les bobines mobiles (7) respectives et du fait de leurs orientation et position respectives par rapport au plateau de pesée (3), génèrent pendant l'opération de pesage des forces de compensation (F_{c1} à F_{c6}) s'exerçant dans les six degrés de liberté sur le plateau de pesée (3),
comprenant les étapes ci-dessous :
- mesure de la position du plateau de pesée (3) dans les trois dimensions au moyen des au moins six capteurs de position (8);
- régulation simultanée des courants circulant dans les bobines mobiles (7) respectives de sorte que les forces de compensation (F_{c1} à F_{c6}), grâce à la somme de leurs couples respectifs, retiennent le plateau de pesée (3) dans une position prédéterminée constante et librement suspendue par rapport à des translations et rotations dans les six degrés de liberté;
- utilisation des quantités des courants circulant dans les bobines mobiles (7) respectives pour calculer le résultat de pesée.

2. Procédé de fonctionnement d'une balance (1) selon la revendication 1, **caractérisé en ce que** les mécanismes électromagnétiques (5) génèrent pendant l'opération de pesage, grâce aux courants circulant dans les bobines mobiles (7) respectives et du fait de leurs orientation et position respectives par rapport à l'élément de couplage (9), des forces de compensation (F_{c1} à F_{c6}) s'exerçant dans les six degrés de liberté sur le plateau de pesée (3) par l'intermédiaire d'un élément de couplage (9) monobloc relié au plateau de pesée (3).

3. Procédé de fonctionnement d'une balance (1) selon la revendication 1 ou 2, **caractérisé en ce que** la mesure de la position du plateau de pesée (3) intervient grâce à la mesure de la position des bobines mobiles (7), et **en ce que** la position du plateau de pesée (3) par rapport aux capteurs de position (8) est dérivée de ladite mesure et de la position connue du plateau de pesée (3) par rapport aux bobines mobiles (7).

4. Procédé de fonctionnement d'une balance (1) selon la revendication 1 ou 2, **caractérisé en ce que** la mesure de la position du plateau de pesée (3) intervient grâce à la mesure de la position de l'élément de couplage (9), et **en ce que** la position du plateau de pesée (3) par rapport aux capteurs de position (8) est dérivée de ladite mesure et de la position connue du plateau de pesée (3) par rapport à l'élément de couplage (9).

5. Procédé de fonctionnement d'une balance (1) selon l'une quelconque des revendications 1 à 4, **caractérisé en ce que** les courants circulant dans les bobines mobiles (7) respectives sont traités afin de calculer l'inclinaison du plateau de pesée (3).

6. Procédé de fonctionnement d'une balance (1) selon l'une quelconque des revendications 1 à 5, **caractérisé en ce que** les courants circulant dans les bobines mobiles (7) respectives sont traités afin de calculer la position du centre de gravité d'un article à peser posé sur le plateau de pesée (3).

7. Procédé de fonctionnement d'une balance (1) selon l'une quelconque des revendications 1 à 6, **caractérisé en ce que** les positions de trois points prédéfinis du plateau de pesée (3) sont mesurées sur l'axe Z, les positions de deux points prédéfinis du plateau de pesée (3) sont mesurées sur l'axe Y, et la position d'un point prédéfini du plateau de pesée (3) est mesurée sur l'axe X.

8. Balance (1) avec un plateau de pesée (3), au moins six capteurs de position (8), dans laquelle les au moins six capteurs de position sont prévus pour mesurer la position du plateau de pesée (3) dans les trois dimensions, un mécanisme de pesage (4) qui présente au moins six mécanismes électromagnétiques (5) comprenant au moins respectivement un aimant permanent (6) et au moins respectivement une bobine mobile (7), dans laquelle le mécanisme de pesage (4), grâce aux courants circulant dans les bobines mobiles (7) respectives et du fait de ses orientation et position respectives par rapport au plateau de pesée (3), est prévu pour générer des forces de compensation (F_{c1} à F_{c6}) s'exerçant dans les six degrés de liberté sur le plateau de pesée (3), une unité de régulation, dans laquelle l'unité de régulation est prévue pour réguler les courants circulant dans les bobines mobiles (7) respectives, dans laquelle les forces de compensation (F_{c1} à F_{c6}), grâce à la somme de leurs couples respectifs, retiennent le plateau de pesée (3) dans une position prédéterminée constante et librement suspendue par rapport à des translations et rotations dans les six degrés de liberté, et une unité de calcul prévue pour calculer le résultat de pesée au moyen des quantités des courants circulant dans les bobines mobiles (7) respectives.

9. Balance (1) selon la revendication 8, **caractérisée en ce que** les au moins six mécanismes électromagnétiques (5) sont agencés les uns par rapport aux autres de telle manière que le poids du plateau de pesée (3) est réparti de manière essentiellement uniforme sur les au moins six mécanismes électromagnétiques (5).

10. Balance (1) selon l'une quelconque des revendications 8 ou 9, **caractérisée en ce que** le plateau de pesée (3) est agencé au-dessus, au-dessous ou à côté du mécanisme de pesée (4).

11. Balance (1) selon l'une quelconque des revendications 8 à 10, **caractérisée en ce que** respectivement trois mécanismes électromagnétiques (5) sont agencés essentiellement sur deux lignes, en particulier parallèles, agencées à proximité l'une de l'autre.

12. Balance (1) selon l'une quelconque des revendications 8 à 10, **caractérisée en ce qu'**au moins trois mécanismes électromagnétiques (5) sont agencés sur un premier côté du plateau de pesée (3), et **en ce qu'**au moins trois mécanismes électromagnétiques (5) sont agencés vis-à-vis du premier côté sur un second côté du plateau de pesée (3).

13. Balance (1) selon l'une quelconque des revendications 8 à 10, **caractérisée en ce que** les mécanismes électromagnétiques (5) sont agencés de telle manière que les mécanismes électromagnétiques (5) agissent sur le plateau de pesée (3) essentiellement comme un hexapode.

14. Balance (1) selon l'une quelconque des revendications 8 à 13, **caractérisée en ce que** l'élément de couplage (9) est un support monobloc à plusieurs bras qui relie ensemble les mécanismes électromagnétiques (5) respectifs et le plateau de pesée (3).

15. Balance (1) selon l'une quelconque des revendications 8 à 14, **caractérisée en ce que** les mécanismes électromagnétiques sont essentiellement identiques et sont agencés essentiellement sur un même plan.
